# EUROPÄISCHE PATENTANMELDUNG

(11) **EP 0 686 829 A2**
(43) Veröffentlichungstag der Anmeldung: **13.12.1995**
(21) Anmeldenummer: 95108096.9
(22) Anmeldetag: 26.05.1995
(51) Int. Cl.: G01B 21/12

(54) **Messgerät zur Überprüfung der Abmessungen von zylindrischen Werkstücken**

(30) Priorität: 09.06.1994 DE 4420137
(71) Anmelder: Zeiss Messgerätebau GmbH, D-76275 Ettlingen (DE)
(72) Erfinder: Ertl, Friedrich, Dr., D-76275 Ettlingen (DE); Bertz, Hans-Ulrich, D-76456 Kuppenheim (DE)
(74) Vertreter: Fey, Hans-Jürgen

(57) **Zusammenfassung**

Das Meßgerät dient zur Vemessung von Kurbelwellen (6) und besitzt neben einer drehbaren Werkstückaufnahme (4,5) eine erste Gruppe von Meßrachen (12a - d) für die Vermessung der Hauptlager der Kurbewelle und eine zweite Gruppe von Meßrachen (19a,b) für die Vermessung der Pleuellager. Jeder Meßrachen der zweiten Gruppe besitzt mehrere Meßfühler und eigene Antriebe für die Bewegung des Meßrachens in der Ebene senkrecht zur Achse der Kurbelwelle und wird bei Drehung der Kurbelwelle (6) entweder auf Sollbahnen entsprechend dem Hub des Pleuellagers gesteuert oder entsprechend den Signalen der Meßfühler der Bewegung des Pleuellagers nachgeführt.

## Beschreibung

Die bekannten Meßgeräte zur Prüfung von Kurbelwellen auf Lage, Position sowie Form der Haupt- und Pleuellager lassen sich in drei Klassen einteilen:

In die erste Klasse gehören sogenannte Vielstellenmeßgeräte. Bei diesen Geräten ist für jedes Lager ein eigenes Meßmittel vorgesehen, so daß bei Drehung der Kurbelwelle alle Lager gleichzeitig gemessen werden können. Solche Maschinen sind wegen der Vielzahl der vorhandenen Meßstellen aufwendig und teuer und darüber hinaus wenig flexibel, da die Meßstellen speziell auf die Geometrie der zu prüfenden Kurbelwelle eingerichtet werden müssen. Aus diesen Gründen werden solche Maschinen meist nur für die 100 Prozent-Kontrolle von Groß-Serien eingesetzt. Vielstellenmeßgeräte für Kurbelwellen sind beispielsweise beschrieben in der Firmenschrift der Hommelwerke mit der Bezeichnung "Kurbelwellen-Meßmaschinen" Druckvermerk 8.89 Ko und in der US-PS 4 651 438. Ein für Nockenwellen geeignetes Vielstellenmeßgerät ist in der internationalen Anmeldung Veröffentlichungsnummer WO 93/10420 beschrieben.

Zur zweiten Klasse von Meßgeräten für den genannten Zweck zählen Koordinatenmeßgeräte. Diese für die Vermessung von ganz unterschiedlichen Werkstücken entwickelten Geräte sind zwar sehr flexibel, benötigen jedoch recht lange Meßzeiten, da alle Meßpunkte nacheinander mit dem einen Taster abgearbeitet werden müssen, den die Maschine trägt.

Die dritte Klasse von Meßgeräten bilden sogenannte Kombinationsmeßgeräte. Diese sind in der Regel nach Art eines Koordinatenmeßgeräts in Zylinderkoordinaten-Bauweise für rotationssymetrische Werkstücke ausgebildet und besitzen eine Meßschneide, von der die verschiedenen Lager nacheinander vermessen werden. Hierbei gleitet das Pleuellager an der Meßschneide entlang. Ein Meßgeräte mit optischer Meßschneide ist beispielsweise in der internationalen Patentanmeldung Veröffentlichungsnummer WO 87/07007 beschrieben. Solche Geräte sind zwar flexibler als Vielstellenmeßgeräte und weniger aufwendig, erreichen allerdings auch nicht die kurzen Meßzeiten von Vielstellenmeßgeräten.

Ein gemeinsames Merkmal der bekannten Kurbelwellen-Meßgeräte aller drei Klassen ist, daß die Meßmittel, mit denen die Pleuellager angetastet werden, nahezu immer im direkten mechanischen Kontakt mit den Pleuellagern stehen und bei Drehung der Kurbelwelle von dieser mitgeschleppt werden. Aus diesem Grunde wird während des Meßvorganges eine nicht unerhebliche Meßkraft von den Meßmitteln auf die zu vermessenden Pleuellager ausgeübt, was entsprechende Anlaufschwingungen, Verschleiß und Meßunsicherheiten zur Folge hat. Zur Verringerung der Meßkräfte verwenden die in der US-PS 4 351 115 und dem europäischen Patent 0 428 543 beschriebenen Meßgeräte Gegengewichte zur Entlastung des Nachführgestänges.

Es ist die Aufgabe der vorliegenden Erfindung ein Meßgerät zur Überprüfung der Abmessungen von zylindrischen Werkstücken, insbesondere Kurbelwellen zu schaffen, das die beschriebenen Nachteile weitgehend vermeidet. Insbesondere solle das Gerät ausreichend flexibel sein, um auch ohne größeren Aufwand für Kleinserien eingesetzt werden zu können, und relativ kurze Meßzeiten bei ausreichend hoher Meßgenauigkeit gewährleisten.

Diese Aufgabe wird gemäß den im Patentanspruch 1 angegebenen Merkmalen gelöst durch ein Meßgerät mit
- einer drehbaren Werkstückaufnahme,
- einer ersten Gruppe von Meßmitteln für die Vermessung der zentrischen Abschnitte des Werkstücks,
- einer zweiten Gruppe Meßmitteln für die exzentrischen Abschnitte des Werkstücks, wobei
- jedes Meßmittel der zweiten Gruppe mehrere Meßfühler enthält und eigene Antriebe für die Bewegung in der Ebene senkrecht zur Werkstücklängsachse, und
- die Meßmittel der zweiten Gruppe bei Drehung des Werkstücks entweder auf Sollbahnen entsprechend der Exzentrizität des zu vermessenden Abschnitts steuerbar oder ihre Positionen entsprechend den Signalen der Meßfühler den Bewegungen der zu vermessenden Abschnitte nachregelbar sind.

Das erfindungsgemäße Gerät besitzt mehrere Vorteile: Zum einen können die Meßmittel zur Vermessung der Pleuellager ohne Umrüstung des Geräts an Kurbelwellen mit verändertem Hub bzw. veränderter Lage der Pleuellager in Richtung der Längsachse der Kurbelwelle angepaßt werden. Trotz dieser im Vergleich zu Vielstellenmeßgeräten höheren Flexibilität resultieren immer noch relativ kurze Meßzeiten, da die zweite Gruppe von Meßmitteln mehrere Pleuellager gleichzeitig vermißt. Als weiteren Vorteil bietet das Gerät die Möglichkeit, nicht nur den Durchmesser und die Rundheit sondern auch den Hub der Pleuellager zu messen und zwar ohne Mehraufwand. Schließlich liefert das erfindungsgemäße Meßgerät sehr genaue Meßwerte, da die Meßmittel der zweiten Gruppe nicht mechanisch mitgeschleppt sondern bei Drehung der Kurbelwelle so geführt werden, daß die Messung abgesehen von dem geringfügigen mechanischen Kontakt zwischen der Spitze der Meßfühler und der zu vermessenden Fläche nahezu kräftefrei erfolgt, und außerdem der Meßzirkel sehr kurz direkt über den Meßrachen und nicht über alle Bewegungsachsen wie bei der typischen Mehrachsen-Meßmaschine geschlossen ist.

Die Meßmittel der ersten Gruppe sind zweckmäßig Meßrachen, die zwar während des Meßvorganges an einem Werkstück stationär sind und an die Lage der Hauptlager der Kurbelwelle angepaßt sind, die jedoch in Richtung der Werkstücklängsachse einstellbar befestigt sind, so daß sie auch an Kurbelwellen mit geänderter Geometrie der Hauptlager angepaßt werden könnnen. Für diesen Zwecke kann auch vorgesehen sein, daß ein Teil der Meßrachen der ersten Gruppe senkrecht zur Werkstücklängsachse einstellbar ist. Diese zusätzlichen Meßrachen werden nur dann benötigt, wenn Kurbelwellen mit einer höheren Anzahl von Hauptlagern gemessen werden müssen.

Ein optimaler Kompromiß zwischen Aufwand, Meßzeit und Flexibilität ergibt sich, wenn die Zahl der Meßmittel der zweiten Gruppe, also die Zahl der Meßrachen, mit denen die Pleuellager gemessen werden, geringer als die Zahl der Pleuellager des Werkstücks selbst ist. Beispielsweise lassen sich mit zwei Meßrachen die Pleuellager der Kurbelwelle eines 4-Zylinder-Motors in zwei Meßläufen ermitteln, zwischen denen die Meßrachen der zweiten Gruppe lediglich einmal automatisch achsial verstellt werden.

Im Hinblick auf eine möglichst hohe Flexibilität ist es außerdem von Vorteil, wenn mindestens einige der Meßmittel Meßrachen sind, die Lager mit unterschiedlichen effektiven Durchmessern vermessen können. Hierzu können die Meßrachen beispielsweise nach Art eines digitalen Meßschiebers oder eines Stufenmeßrachens ausgebildet sein. Eine andere Möglichkeit besteht darin, die Meßmittel auswechselbar zu gestalten, beispielsweise durch magnetische Spannung auf ein Dreipunktlager ähnlich wie die auswechselbaren Taster von Mehrkoordinatenmeßgeräten gehalten sind.

Zur Anpassung an einen automatischen Betrieb mit selbsttätiger Zuführung der Werkstücke ist es zweckmäßig, wenn die Achse der Werkstückaufnahme waagerecht ausgerichtet ist und die Meßrachen alle einseitig bezogen auf die Achse der Werkstückaufnahme vor bzw. hinter dieser angeordnet sind. Das Meßgerät läßt sich dann sehr einfach in bereits vorhandene automatische Zuführungs- und Beladeeinrichtungen im Fertigungsprozeß integrieren.

Weitere Vorteile der Erfindung ergeben sich aus der nachfolgenden Beschreibung von Ausführungsbeispielen anhand der Figuren 1 - 7 der beigefügten Zeichnungen.
- Figur 1: ist eine perspektivische Prinzipsskizze, die ein Kurbelwellenmeßgerät nach der Erfindung in Gesamtansicht zeigt;
- Figur 2: zeigt das Gerät aus Figur 1 in Aufsicht;
- Figur 3: ist eine vereinfachte Skizze eines Stufenmeßrachens;
- Figur 4: ist eine perspektivische Darstellung eines Meßrachens auf einem Wechselhalter;
- Figur 5: ist die vereinfachte Skizze eines Meßrachens mit veränderlichem Durchmesser;
- Figur 6: ist ein Blockschaltbild, das die wesentlichen Komponenten der Bewegungssteuerung für die Meßrachen zeigt, mit denen die Pleuellager gemessen werden;
- Figur 7: ist ein Blockschaltbild, das die wesentlichen Komponenten für die Nachregelung der Bewegung der Meßrachen für die Pleuellager gemäß einem alternativen Ausführungsbeispiel zeigt.

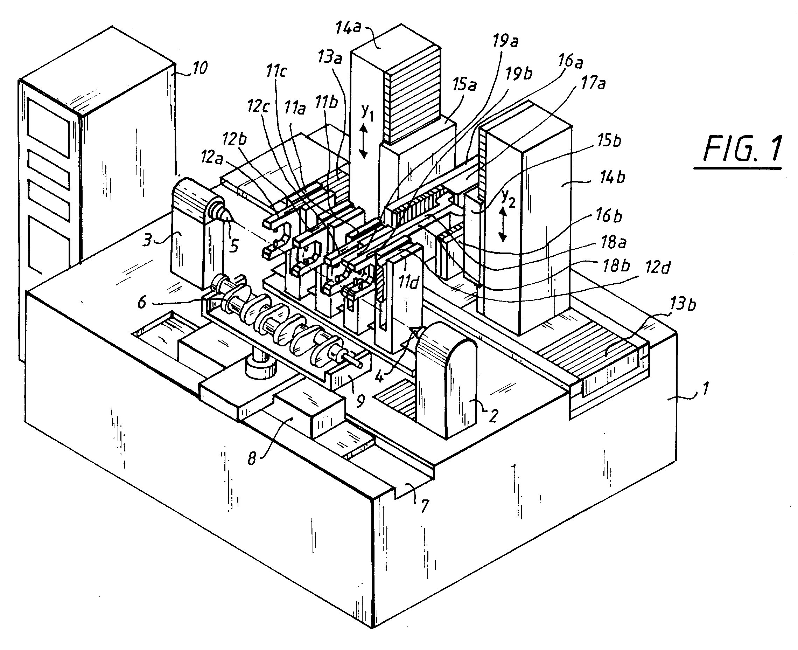

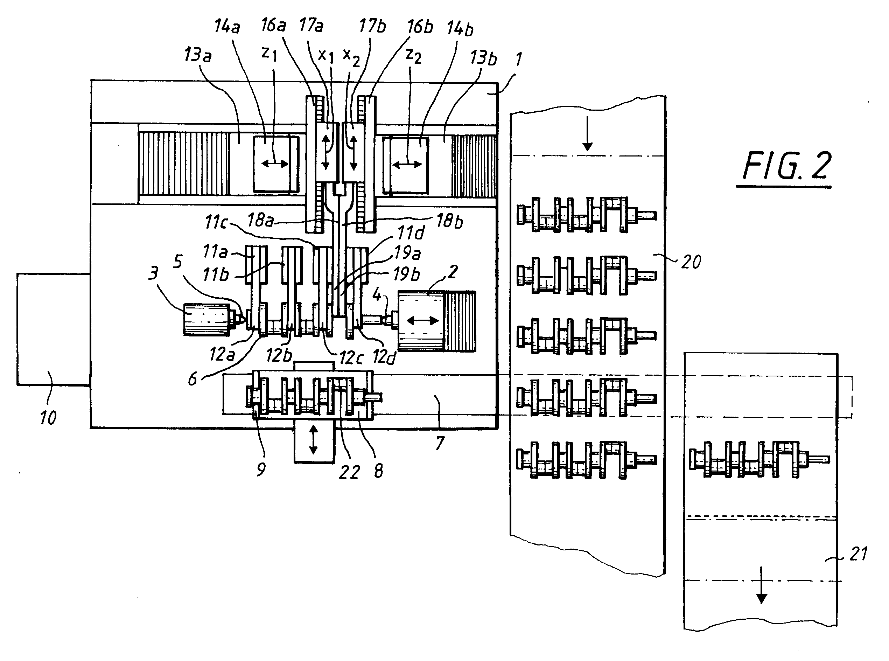

Das in den Figuren 1 und 2 dargestellte Kurbelwellenmeßgerät besitzt ein Maschinengrundbett (1) beispielsweise aus Grauguß, auf dem die beiden Träger (2) und (3) für zwei Spitzen (4) und (5) aufgebaut sind, zwischen denen die zu vermessende Kurbelwelle (6) eingespannt wird. Die Säule (2) mit der Spitze (4) ist in Richtung der Kurbelwellenlängsachse verschiebbar gelagert, um das Spannen zu ermöglichen und an Kurbelwellen unterschiedlicher Länge anpaßbar zu sein. Der Träger (2) enthält außerdem einen Antrieb zur Drehung der Spitze (4) sowie einen Encoder zur Messung der Drehwinkelstellung. Ebenfalls nicht dargestellt ist der Mitnehmer, der die Bewegung der Spitze (4) auf die Kurbelwelle (6) überträgt.

Zugeführt wird die Kurbelwelle (6) der Maschine über ein in einer Führung (7) gelagertes Handhabungsgerät (8), das die zu prüfende Kurbelwellen einem neben dem Meßgerät angeordneten Transportband (20) entnimmt und nach dem Meßvorgang auf einem zweiten Transportband (21) wieder ablegt.

Auf der dem Handhabungsgerät abgewandten Seite des Maschinenbettes (1) sind auf einer Prismenführung parallel zur Verbindungslinie der beiden Spitzen (4) und (5) verstellbar vier Träger (11a - d) befestigt, die je einen nach vorne offenen Meßrachen (12a - d) tragen. Die Meßrachen dienen der Prüfung von Form und Lage der vier Hauptlager der Kurbelwelle (6) auf Abweichungen in x-Position und Form der Lagerflächen. Dazu enthält die Gabel jedes Meßrachens zwei gegenüberliegende Meßwertgeber, beispielsweise Induktivtaster, deren leicht angefederte Spitze im Meßbetrieb an der zu prüfenden Lagerfläche anliegt, wenn die Kurbelwelle zwischen den Spitzen (4) und (5) gespannt ist.

Die Spitzen sind als hochgenaue Drehlager ausgeführt, wenn die Form nicht nur als Differenz aus maximal und minimal gemessenem Durchmesser bestimmt werden soll (Ovalität), sondern als Radiusabweichung von einer quasi idealen Achse.

Zur Anpassung an die Lage der Hauptlager können die Träger (11a - d) mit den Meßrachen (12a - d) in Richtung der Längsachse der Kurbelwelle (6) verstellt werden. Diese Umrüstung geschieht nur dann, wenn eine Serie von Kurbelwellen eines anderen Typs zu vermessen ist. Es ist zudem auch möglich, weitere Meßrachen in die Prismenführung einzufügen, wenn Kurbelwellen mit einer höheren Zahl von Hauptlagern zu vermessen sind.

Auf der dem Handhabungsgerät (8) gegenüberliegenden Seite des Meßgeräts sind hinter den Meßrachen (12a - d) für die Hauptlager die Führungen für zwei weitere Meßrachen (19a und b) angeordnet, mit denen die drei Paare von nebeneinanderliegenden Pleuellagern der Kurbelwelle (6) gemessen werden können. Hierzu besitzt das Meßgerät zwei z-Führungen (13a,13b), in denen waagerecht und parallel zur Verbindungslinie zwischen den Spitzen (4) und (5) zwei Ständer (14a) und (14b) motorisch verschiebbar gelagert sind. An jedem Ständer ist je ein Schlitten (15a) und (15b) in Richtung der mit y1 und y2 bezeichneten Pfeile motorisch vertikal verschiebbar und an jedem dieser Schlitten (15a) und (15b) ist eine weitere Führung (16a) und (16b) angebaut, in der die beiden Meßrachen (19a) und (19b) in Richtung der mit x1 und x2 bezeichneten Pfeile motorisch verschiebbar sind. Hierzu sind die Meßrachen (19a) und (19b) jeweils an einem waagerechten Arm (18a) bzw. (18b) befestigt, der von einem an der Führung (16a) bzw. (16b) verschiebbar gelagerten Schlitten (17a) bzw. (17b) getragen wird. Die Antriebe der genannten drei Schlitten bzw. Schlittenpaare werden von der Steuerung (10) des Meßgerätes betrieben.

Da die zwei für die Messung der Pleuellager vorgesehenen Meßrachen (19a) und (19b) in der Ebene x/y senkrecht zur Längsachse der Kurbelwelle (6) antreibbar sind, können sie bei Drehung der Kurbelwelle (6) dem Hub der Pleuellager folgen. Auf diese Weise können gleichzeitig die vier Hauptlager und zwei Pleuellager bei einer Umdrehung der Kurbelwelle (6) vermessen werden. Anschließend werden die Meßrachen (19a und b) in Richtung der Pfeile x1 und x2 zurückgezogen, in z-Richtung neu positioniert und messen dann das jeweils nächste Paar von Pleuellagern. Auf diese Weise lassen sich die sechs Pleuellager der Kurbelwelle (6) eines 6-Zylinder Motors relativ rasch in nur drei Umdrehungen der Kurbelwelle messen. Sind die Abstände der benachbarten Pleuellager konstant, können beide Ständer (14a) und (14b) auch auf einer gemeinsamen z-Achse montiert sein.

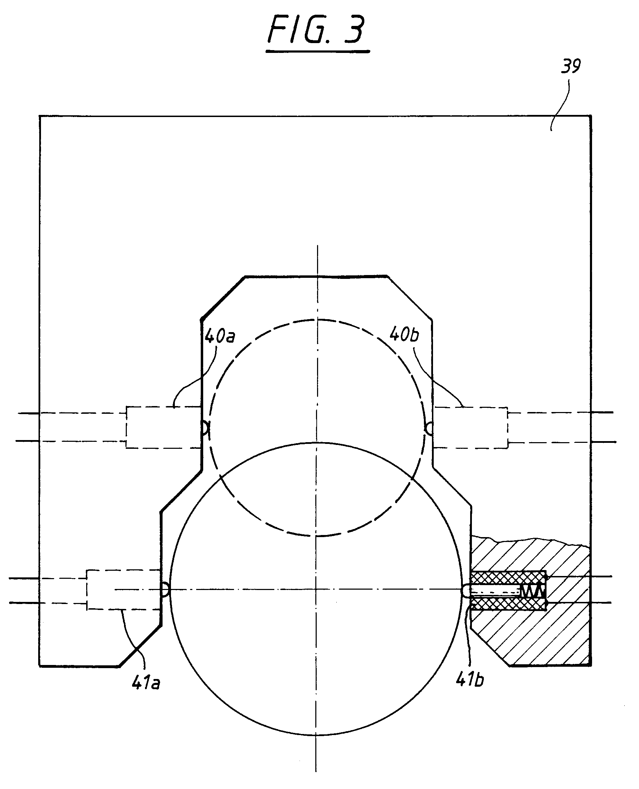

Zur Erhöhung der Flexibilität der Maschine kann es zweckmäßig sein, die Meßrachen (12) und (19) durch Stufenmeßrachen zu ersetzen. Ein solcher Stufenmeßrachen ist in Figur 3 skizziert. Er besitzt eine abgestufte Gabel, die somit Lager mit unterschiedlichem Durchmesser umfassen kann. In beiden Bereichen der Gabel ist jeweils einander gegenüberliegend ein Paar von Induktivtastern (40a) und (40b) und (41a) und (41b) angeordnet, deren Signale der Steuerung (10) zur Meßwertauswertung zugeführt sind. Selbstverständlich können anstelle der Induktivtaster auch andere Sensoren wie z.B. kapazitive, optische oder pneumatische Abstandsensoren eingesetzt sein.

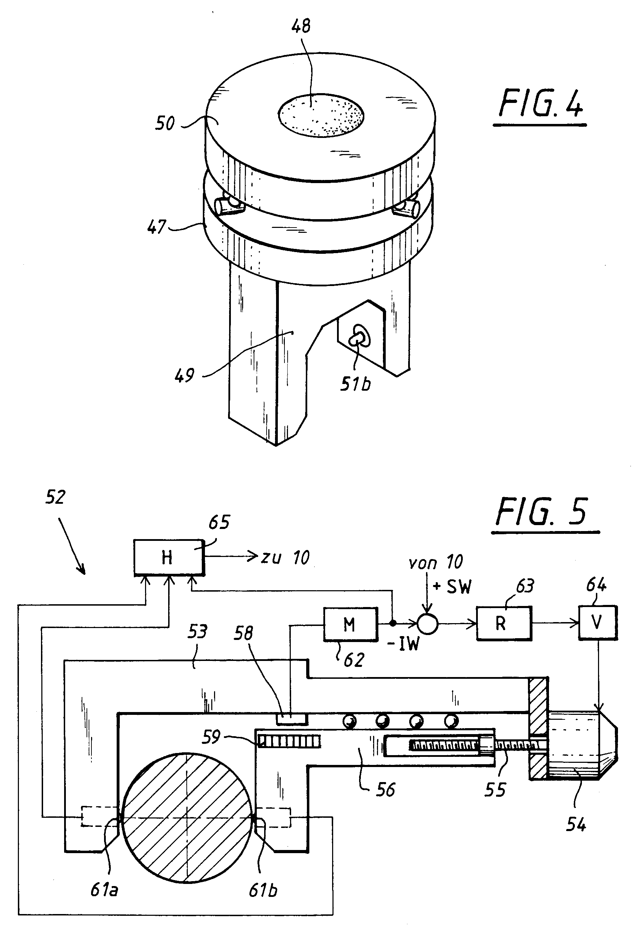

Eine weitere Möglichkeit zur Anpassung der Meßrachen an die Durchmesser der Lager der Kurbelwelle ist in Figur 4 skizziert. Der dort dargestelle Meßrachen (49) ist auf einem Wechselteller (47) montiert, der von einem Magneten (48) im Gegenteller (50) am feststehenden Teil des Meßgerätes gegen ein Dreipunktlager gespannt ist. Er kann dort gegen Meßrachen mit anderer Gabelweite manuell oder automatisch ausgetauscht werden.

Schließlich ist es auch möglich, Meßrachen mit verstellbarem Durchmesser vorzusehen. Ein solcher Meßrachen (52) ist in Figur 5 skizziert. Bei diesem Meßrachen ist am Basisschenkel (53) ein Motor (54) befestigt, der über einen Spindeltrieb (55) den über eine Kugelführung am Basisschenkel gelagerten Gegenschenkel (56) verstellt. Der Gegenschenkel (56) trägt ein Maßstabsgitter (59), das von einem Geber (58) abgetastet wird. Der hierdurch in der Auswerteschaltung (62) ermittelte Wert für den Meßwert M, d.h. der Abstand der Schenkel (53) und (56) wird ebenso wie die Meßwerte der Induktivtaster (61a) und (61b) einer Schaltung (65) zugeführt, die aus den Signalen den Durchmesser des zu prüfenden Zapfens oder Nockens oder Lagers bestimmt und an die Steuerung (10) des Meßgeräts weitergibt.

Gleichzeitig liefert die Steuerung (10) den Sollwert für die Einstellung des Durchmessers des Meßrachens, der mit dem von der Auswerteschaltung (62) gelieferten Istwert verglichen wird. Das Differenzsignal wird einem Regler (63) zugeführt, der die Endstufe (64) zur Ansteuerung des Motors (54) bedient.

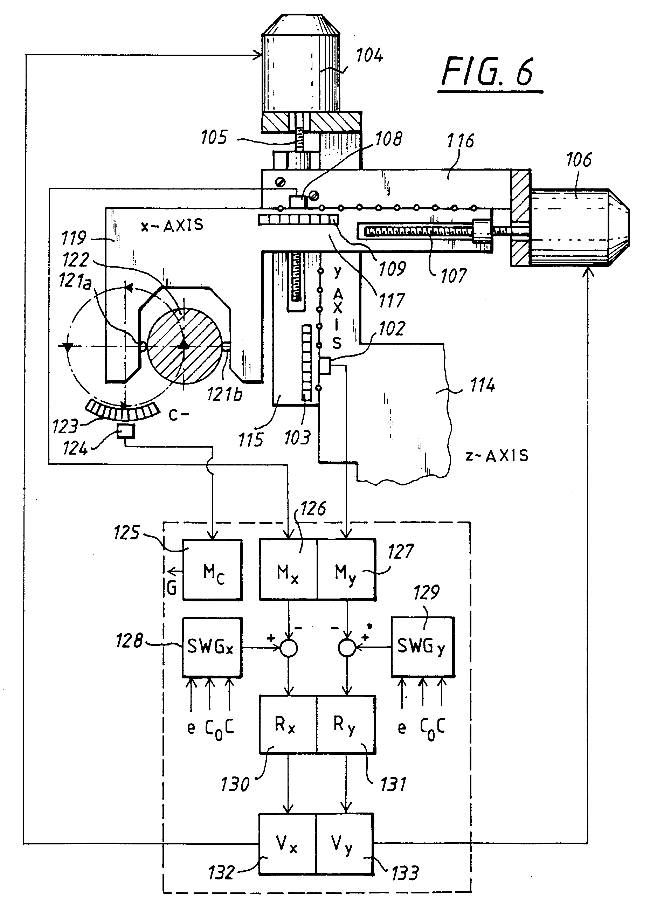

Da die Meßrachen zur Erfassung des Durchmessers und/oder der Form der Pleuellager numerisch gesteuert bewegt werden, wird die Oberfläche des zu prüfenden Lagers kräftefrei und weitestgehend verschleißfrei abgetastet. Dies wird nachfolgend anhand der Figur 6 erläutert, in der die wesentlichen Komponenten der Bewegungssteuerung für die Meßrachen dargestellt sind, wie sie beispielsweise in der Maschinensteuerung (10) des Geräts nach Figur 1 und 2 implementiert sein kann.

Der in Fig. 6 mit (119) bezeichnete Meßrachen für das Pleuellager ist wie durch die Kugeln angedeutet in der Ebene senkrecht zur Längsachse der Kurbelwelle (122) beweglich gelagert. Hierzu wird der an der Führung (114) verschiebliche Schlitten (115) vertikal mit Hilfe eines Motors (104) und eines Spindeltriebs (105) bewegt. Ganz entsprechend wird der Träger (117) für den Meßrachen (119) entlang der am Schlitten (115) befestigten waagerechten Führung (116) durch einen Motor (106) mit Spindeltrieb (107) bewegt. Den Führungen ist je ein photoelektrischer Geber (102) bzw. (108) zugeordnet, der ein Maßstabsgitter (103) bzw. (109) am entsprechenden Meßschlitten abtastet. Mit (124) ist ein weiterer Geber bezeichnet, der den Teilkreis (123) abtastet, mit dem die Winkelstellung der Kurbelwelle (122) gemessen wird.

Die dargestellte Steuerung arbeitet nun so, daß bei Drehung der Kurbelwelle und demzufolge exzentrischer Bewegung des Pleuellagers (122) der Meßrachen (119) so auf der dem Hub des Pleuellagers (122) entsprechenden Flugbahn geführt wird, daß sich das Pleuellager (122) stets im zulässigem Meßbereich der beiden Induktivtaster (121a) und (121b) befindet. Hierzu werden die Signale der Geber (102) und (108) zwei Schaltungen (126) und (127) zugeführt, die den Positionswert in Richtung der x bzw. y-Führung ermitteln. Diese Positions-Istwerte werden mit den entsprechenden Signalen zweier Sollwertgeber (128) und (129) verglichen. Diese Sollwertgeber (128) und (129) erhalten von der Steuerung (10) des Meßgeräts die entsprechend den Istwertsignalen für die Winkelstellung der Kurbelwelle abgeleiteten Drehwinkelinformationen C, und die Werkstückdaten Cₒ und e, die den Start-Winkel und den Hub des Pleuellagers (122) beschreiben und bilden daraus durch Sinus/Cosinus-Zerlegung die Sollwerte für die Position des Meßrachens (119) in der x- bzw. y-Achse. Die mit den Istwerten verglichenen Sollwerte ergeben Differenzsignale, die Regelbausteinen (130) und (131) für die x- und y-Achse zugeführt sind, von denen wiederum die Endstufen (132) und (133) für die beiden Antriebsmotoren (104) und (106) angesteuert werden. Der Meßrachen (119) bewegt sich also synchron mit dem Pleuellager (122) auf einer Sollkreisbahn und die Induktivtaster (121a) und (121b) messen gleichzeitig sowohl die Formabweichung der Lageroberfläche als auch die Abweichungen des Pleuellager-Hubs vom Sollwert.

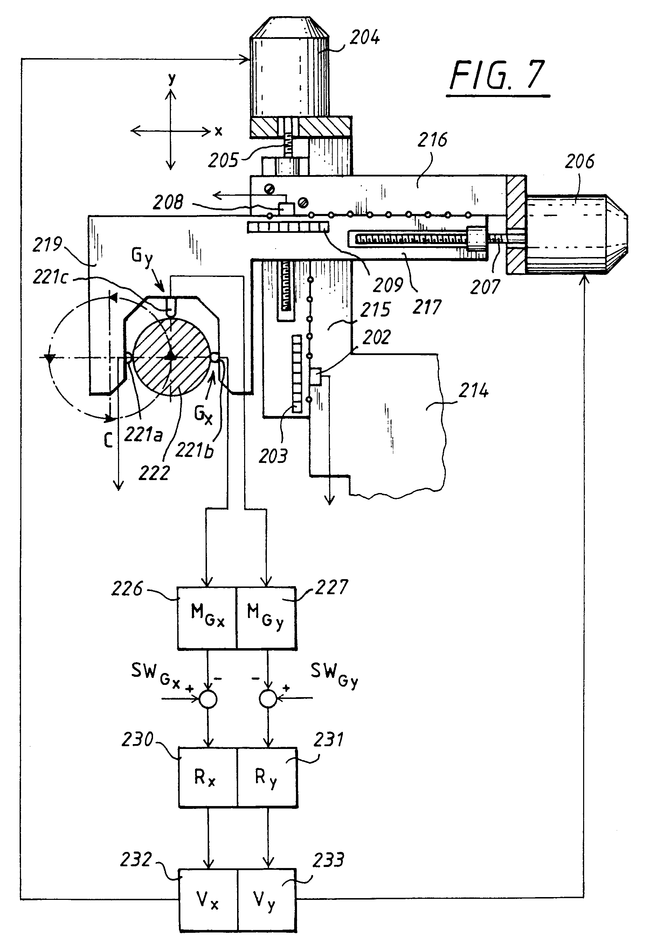

Im Ausführungsbeispiel nach Figur 7 ist eine etwas andere Variante der Bewegungssteuerung für den dort mit (219) bezeichneten Meßrachen dargestellt. Diese Variante arbeitet als Nachlaufsteuerung und benutzt die Signale der zwei parallel zu den Bewegungsachsen x und y ausgerichteten Induktivtaster (221b) und (221c) im Meßrachen (219), um diesen der Bewegung des Pleuellagers (222) nachzusteuern. Im Vergleich zur Figur 6 entsprechende Teile sind mit einer um 100 höheren Bezugsziffer versehen und auf eine nochmalige Beschreibung wird an dieser Stelle verzichtet.

Die Nachregelung der Position geschieht hier so, daß die Signale der Induktivtaster (221b) für die x-Richtung und (221c) für die y-Richtung in entsprechenden Schaltungen (226) und (227) in Taster-Istwerte umgesetzt werden, die mit Sollwerten verglichen werden, die der Mitte des Meßbereichs der Induktivtaster entsprechen. Die Differenzsignale, die ein Auswandern des Pleuellagers (222) aus der Mitte des Meßrachens (219) beschreiben, werden über je einen Regler (230) und (231) auf die entsprechenden Motorendstufen (232) und (233) für die Antriebe (206) und (204) gegeben, die den Meßrachen (219) entsprechend nachführen.

Beide in Figur 6 und Figur 7 skizzierte Steuerungsvarianten können bei dem in Figur 1 und 2 dargestellten Kurbelwellenmeßgerät eingesetzt werden.

In den Ausführungsbeispielen ist primär ein Kurbelwellenmeßgerät beschrieben worden. Es ist jedoch auch möglich, ein Meßgerät zur Prüfung von Nockenwellen mit den beschriebenen Maßnahmen und Merkmalen aufzubauen.

## Patentansprüche

1. Meßgerät zur Überprüfung der Abmessungen von zylindrischen Werkstücken mit zentrischen und exzentrischen Abschnitten wie z.B. Kurbelwellen (6) oder Nockenwellen mit
- einer drehbaren Werkstückaufnahme (4,5),
- einer ersten Gruppe von Meßmitteln (12a-d) für die Vermessung der zentrischen Abschnitte des Werkstücks (6),
- einer zweiten Gruppe von Meßmitteln (19a,b;119;219) für die exzentrischen Abschnitte (122;222) des Werkstücks, wobei
- jedes Meßmittel der zweiten Gruppe mehrere Meßfühler enthält und eigene Antriebe für die Bewegung in der Ebene senkrecht zur Werkstücklängsachse, und
- die Meßmittel (19a,b;119;219) der zweiten Gruppe bei Drehung des Werkstücks (6) entweder auf Sollbahnen entsprechend der Exzentrizität des zu vermessenden Abschnitts (122;222) steuerbar oder ihre Positionen entsprechend den Signalen der Meßfühler den Bewegungen der zu vermessenden Abschnitte (122;222) nachregelbar sind.

2. Meßgerät nach Anspruch 1, wobei die Meßmittel der ersten Gruppe Meßrachen (12a-d) sind, die während des Meßvorganges an einem Werkstück (6) stationär sind.

3. Meßgerät nach Anspruch 2, wobei die Meßrachen (12a-d) der ersten Gruppe in Richtung der Werkstücklängsachse einstellbar befestigt sind.

4. Meßgerät nach Anspruch 2, wobei ein Teil der Meßrachen der ersten Gruppe senkrecht zur Werkstücklängsachse einstellbar ist.

5. Meßgerät nach einem der Ansprüche 1 - 4, wobei die Zahl (zwei) der Meßmittel (19a,b) der zweiten Gruppe kleiner oder gleich als die Zahl (sechs) der exzentrischen Abschnitte des Werkstücks ist und die Meßmittel (19a,b) parallel zur Werkstücklängsachse positionierbar sind.

6. Meßgerät nach einem der Ansprüche 1 - 5, wobei die Werkstücke (6) Kurbelwellen sind und das Meßgerät gleichzeitig die Form der Hauptlager und den Hub der Pleuellager mißt.

7. Meßgerät nach einem der Ansprüche 1 - 5, wobei die Werkstücke Nockenwellen sind und das Meßgerät gleichzeitig die Form der Lager und den Hub der Nocken mißt.

8. Meßgerät nach einem der Ansprüche 1 - 7, wobei die Meßmittel (12a-d;19a,b;119;219) Meßrachen sind, die jeweils zwei oder drei Induktivtaster (121a,b;221a,b,c) enthalten.

9. Meßgerät nach einem der Ansprüche 1 - 7, wobei die Meßmittel optische oder kapazitive Meßfühler oder pneumatische Meßdüsen enthalten.

10. Meßgerät nach einem der Ansprüche 1 - 9, wobei zumindest einige der Meßmittel (39;53/56) Meßrachen sind, die das Messen von Lagern mit unterschiedlichen Durchmessern erlauben.

11. Meßgerät nach Anspruch 10, wobei die Meßrachen nach Art eines Meßschiebers (53/56) mit kontinuierlich einstellbarem Abstand ausgebildet sind.

12. Meßgerät nach Anspruch 10, wobei die Meßrachen nach Art eines Stufenmeßrachens (39) ausgebildet sind.

13. Meßgerät nach Anspruch 1, wobei die Meßmittel auswechselbar gehaltene Meßrachen (49) sind.

14. Meßgerät nach einem der Ansprüche 1 - 13, wobei die Achse der Werkstückaufnahme (4-5) waagerecht ausgerichtet ist.

15. Meßgerät nach Anspruch 14, wobei die Meßrachen alle einseitig bezogen auf die Achse der Werkstückaufnahme (4-5) vor bzw. hinter dieser angeordnet sind.

16. Meßgerät nach einem der Ansprüche 1 - 15, wobei auf der den Meßrachen abgewandten Seite der Werkstückaufnahme (4-5) eine automatische Zuführungs- und Beladeeinrichtung (8) an das Meßgerät angebaut ist.
